# FASCICULE DE BREVET EUROPEEN

(11) **EP 1 118 586 B1**
(45) Date de publication et mention de la délivrance du brevet: **27.04.2005**
(21) Numéro de dépôt: 01400023.6
(22) Date de dépôt: 05.01.2001
(51) Int. Cl.: C02F 1/467, A62D 3/00, C02F 1/461, C02F 1/76

(54) **Procédé de désinfection et de lutte contre la légionellose dans des équipements de distribution d'eau chaude sanitaire**
Verfahren zur Desinzifierung und Bekämpfung von Legionellosis in Warmwasserversorgungseinrichtungen
Method for disinfection and control of legionellosis in hot water supply systems

(30) Priorité: 18.01.2000 FR 0000598
(43) Date de publication de la demande: 25.07.2001
(73) Titulaire: Institut Français du Pétrole, 92852 Rueil-Malmaison Cedex (FR); Lacaze S.A., 46120 Leyme (FR)
(72) Inventeur: Lacaze, Pierre, 46120 Leyme (FR); Hendou, Mouloud, 46400 Bannes (FR); Flament, Patrick, 78610 Auffargis (FR)

(56) Documents cités:
- EP-A- 0 155 479
- EP-A- 0 343 092
- EP-A- 0 470 841
- WO-A-94/26668
- US-A- 4 994 163
- US-A- 5 958 229
- US-A- 5 993 669

## Description

La présente invention concerne le domaine de désinfection et de lutte contre la légionellose dans les équipements de stockage, de production et l'ensemble des circuits de distribution d'eau chaude sanitaire.

On connaît des dispositifs de production de chlore libre à partir d'électrolytes constitués d'eau et de sels (chlorure de sodium) à fortes concentrations, par exemple entre 65 et 150 g/l.

On connaît aussi des dispositifs d'électrolyse à compartiments séparés destinés à transformer électrochimiquement une solution d'eau et de sels avec obtention de chlore moléculaire gazeux (Cl₂) dans les chambres anodiques.

Ces types d'installation sont destinés à une production d'une solution contenant du chlore libre ou à la production de chlore gazeux en vue de leur stockage et d'une opération de désinfection en mode discontinu. Par ailleurs, afin d'obtenir de bons rendements de transformation, la solution électrolytique est recyclée dans le réacteur électrolytique, ce qui empêche l'utilisation de ces techniques pour l'injection en continue du chlore libre dans l'eau.

Les solutions électrolytiques utilisées dans ces dispositifs (fortement chargées en sel) engendrent, après transformation électrochimique, des produits contenant 30 à 70 g/l de chlorure. L'utilisation de ces produits pour la désinfection et la lutte contre la légionellose dans les équipements de production, de stockage et les circuits de distribution d'eau chaude sanitaire pose des problèmes de corrosion liés à l'augmentation du taux de chlorure dans l'eau à la suite de l'injection de ces produits.

Il faut signaler aussi que les solutions issues de techniques électrolytiques précitées sont caractérisées par un pH alcalin défavorable à la formation du chlore libre actif et à l'effet bactéricide.

La présente invention présente en revanche l'avantage de permettre de produire par électrolyse une solution de désinfection spécifique aux équipements de stockage, de production et des circuits de distribution d'eau chaude. Cette solution obtenue par l'électrolyse d'un électrolyte renfermant de l'eau et du sel (chlorure de sodium), par exemple à une concentration ne dépassant pas 30 g/l, ainsi que l'acide chlorhydrique pour réaliser un pH compris entre 4 et 5, fournit après transformation électrochimique un produit contenant du chlore libre, par exemple de l'ordre de 3 g/l, ayant un pH sensiblement neutre favorable à la formation du chlore libre actif et à l'effet bactéricide.

En outre l'invention permet l'injection permanente du chlore libre dans l'eau destinée au chauffage sans modifier son pH et avec une augmentation du taux de chlorure ne dépassant pas 10 mg/l ce qui préserve les équipements de la corrosion.

La présente invention permet également une automatisation complète du fonctionnement assurant une désinfection permanente sans risque d'effets secondaires néfastes.

La présente invention permet la production d'une solution renfermant du chlore libre, en vue de la désinfection et de la lutte contre la légionellose dans les équipements de stockage, de production et les circuits de distribution d'eau chaude. L'invention concerne un procédé pour le traitement en continu d'une eau qui met en oeuvre un dispositif qui comporte un bac de préparation d'un électrolyte, une pompe d'injection de l'électrolyte dans un réacteur contenant une anode et une cathode, une conduite d'injection de la solution électrolysée dans une canalisation d'eau, des moyens de mesure du débit d'eau en circulation dans ladite canalisation, des moyens de réglage de l'intensité du courant entre l'anode et la cathode et du débit d'injection de l'électrolyte. Dans le procédé, on règle le débit de la pompe d'injection en fonction du débit d'eau dans ladite canalisation, et on injecte en continu la solution électrolysée, on règle l'intensité du courant dans l'électrolyseur pour que le taux de chlore libre dans l'eau à traiter soit compris entre 2 et 3,5 mg/l, et on stabilise le pH de la solution électrolytique entre 4 et 5.

Le bac de préparation peut comporter une sonde de mesure du pH de la solution électrolytique.

Le bac de préparation peut comporter des moyens de réglage du pH de l'électrolyte.

Les moyens de régulation du débit d'injection et/ou de l'intensité de courant peuvent agir en fonction du débit d'eau froide dans la canalisation.

La solution électrolytique peut être composée d'eau, de chlorure de sodium et d'acide chlorhydrique.

La concentration en chlorure de sodium de la solution électrolytique peut ne pas excéder 30 g/l.

La concentration en acide chlorhydrique de ladite solution électrolytique peut être ajustée de telle sorte que le pH de la solution est stabilisé entre 4 et 5.

La cathode peut être constituée de tiges en acier montées verticalement et soudées sur une plaque circulaire de telle sorte que l'ensemble réalise une géométrie cylindrique.

L'anode peut être constituée par un cylindre métallique placé au centre de la cathode, de préférence en tôle déployée.

Le cylindre peut être revêtu d'oxyde d'Iridium et/ou de Ruthénium.

L'ensemble cathode et anode peut avoir une hauteur d'environ 300 mm et un diamètre extérieur d'environ 300 mm.

La présente invention sera mieux comprise et ses avantages apparaîtront plus clairement à la lecture de la description de l'exemple de réalisation suivant, nullement limitatif, et illustré par les figures ci-après annexées, parmi lesquelles :
- La figure 1 montre le schéma général du dispositif selon l'invention,
- La figure 2 illustre schématiquement les électrodes du réacteur d'électrolyse.
- La figure 3 illustre les équilibres HClO et ClO en fonction du pH.
- La figure 4 montre un exemple de régulation de l'intensité du courant dans l'électrolyseur en fonction du débit d'eau à traiter.

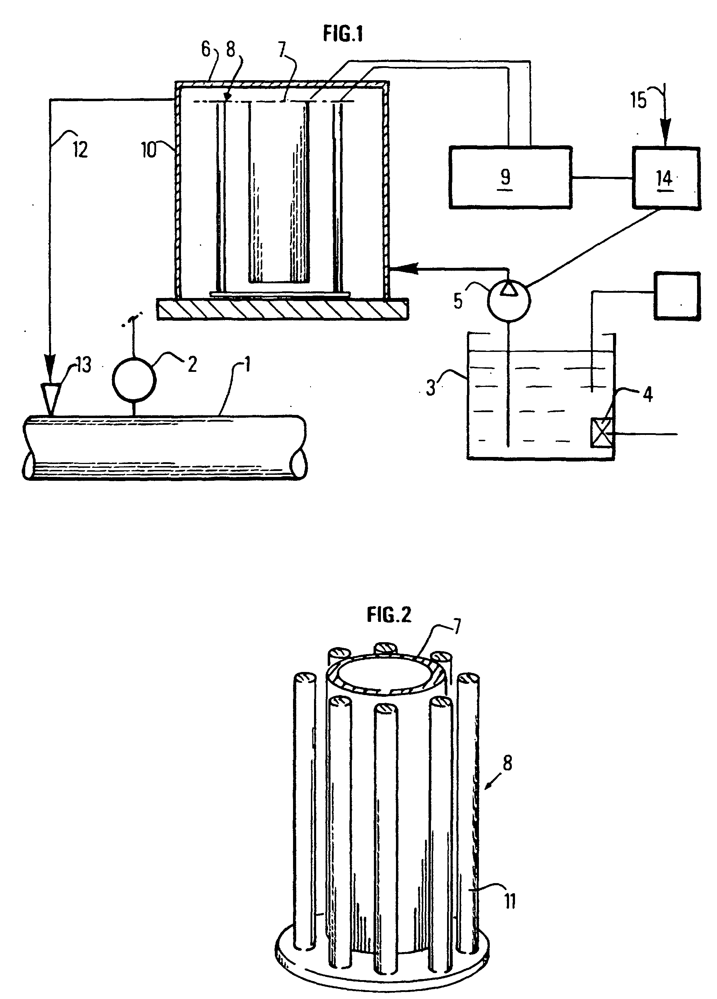

Sur la figure 1, la référence 1 désigne une conduite d'alimentation en eau qui doit être traitée selon l'invention. Un débitmètre 2 placé sur la conduite mesure en continu le débit d'eau afin d'adapter le traitement au volume d'eau. Le débitmètre est par exemple un compteur à impulsion permettant des mesures de débits jusqu'à 15 m³/h. Dans une version préférée, le débitmètre permet la mesure de débit dans la plage 100 l/h à 15 m³/h.

Le dispositif comporte un réservoir 3 de stockage et de préparation de la solution électrolytique. La solution électrolytique est constituée d'eau distillée, de chlorure de sodium et d'acide chlorhydrique. La concentration en sel de la solution est comprise entre 20 et 30 g/l. La quantité ajoutée d'acide chlorhydrique est telle qu'elle permet de stabiliser le pH entre 4 et 5 de la solution électrolytique préparée dans le bac 3.

Dans une version préférée, la solution électrolytique a un pH d'environ 5 et une concentration en chlorure de sodium d'environ 30 g/l.

Le réservoir de stockage 3 de la solution électrolytique est équipé d'une sonde 4 de détection de niveau bas de l'électrolyte. Dans le cas de manque de produit, une alarme se déclenche.

Une pompe d'injection et d'alimentation 5 transfère la solution électrolytique à débit variable jusqu'à 10 l/h vers un électrolyseur 6.

Dans une version préférée de cette invention la pompe est de type doseuse délivrant un débit pouvant être compris entre 500 ml/h et 10 l/h. L'admission de solution électrolytique se fait de préférence dans le bas de l'électrolyseur.

Un réacteur d'électrolyse ou électrolyseur 6, est constituée d'une chambre contenant une anode 7 et une cathode 8 reliées à un générateur 9 de courant à intensité variable pouvant atteindre 140 Ampères sous 12 Volts.

Le réacteur d'électrolyse est équipé d'une double enveloppe 10 dans laquelle circule un fluide de refroidissement, par exemple de l'eau, permettant de maintenir le milieu réactionnel à une température inférieure à 30°C.

Dans une version préférée de cette invention l'enveloppe du réacteur d'électrolyse est en polypropylène et a une forme cylindrique.

La figure 2 illustre une cathode 8 constituée par un ensemble de tiges 11 en acier inoxydable. Ces tiges sont assemblées verticalement et soudées sur une plaque circulaire en acier inoxydable, de telle sorte que l'ensemble réalise une géométrie cylindrique pour la cathode. L'anode 7 est en forme de cylindre en titane recouvert d'oxyde mixte d'Iridium et de Ruthénium placée au centre de la cage formée par la cathode 8 et du réacteur électrolytique 10. De préférence, l'anode est en métal déployé, c'est à dire du type tôle perforée ou grillage. Ainsi, le liquide en électrolyse circule efficacement dans l'électrolyseur.

Une telle disposition favorise la réaction électrochimique créée par l'anode et la cathode, notamment les mouvements des liquides, favorables à la réaction, sont permis grâce aux formes respectives anode/cathode.

Selon un mode de réalisation, la cathode est constituée par 39 barres de 10 mm de diamètre, espacées de 10 mm, sur un cercle d'environ 300 mm de diamètre. La hauteur de la cathode est de 300 mm. Les plaques circulaires (300 mm de diamètre) sur lesquelles sont fixées les barres 11 sont en Inox de 3 mm d'épaisseur.

L'anode est un cylindre en tôle, de préférence déployée, en titane d'environ 2 mm formée en cylindre de diamètre 280 mm et de 300 mm de hauteur. La paroi de l'anode est de préférence recouverte d'oxyde d'Iridium et de Ruthénium, ou un matériau équivalent.

Les électrodes utilisées pour le réacteur électrolytique (anode et cathode) peuvent fonctionner avec une densité de courant pouvant atteindre 500 A/m².

De préférence, les électrodes sont soumises à des densités de courant variant de 100 à 500 A/m².

Les électrodes sont reliées à un générateur 9 de courant continu stabilisé et filtré délivrant une intensité de courant pouvant être régulée et contrôlée entre 4 et 140 A.

La solution ayant subi une transformation électrochimique au sein de l'électrolyseur est injectée dans le réseau 1 d'alimentation en eau froide par l'intermédiaire d'un conduit 12 dont l'orifice est, de préférence, éloigné de l'alimentation en solution électrolytique et situé dans la partie haute de l'électrolyseur. Le conduit 12 débouche dans la conduite 1 par une sonde d'injection 13 équipée d'un clapet anti-retour.

La sonde d'injection 13 peut être un tube en polypropylène équipé d'un clapet anti-retour sous forme d'une bille montée sur un ressort.

L'ensemble des composants du dispositif selon l'invention est conçu pour un fonctionnement sous des pressions pouvant atteindre 10 bar.

Le fonctionnement du dispositif est géré par des moyens électroniques 14 comportant une carte électronique permettant le contrôle et la régulation de l'ensemble du système en agissant sur le réglage du courant d'électrolyse, compte tenu de la valeur du débit d'eau froide mesurée par le débitmètre 2, mesure symbolisée par la flèche 15. Le débit d'alimentation fourni par la pompe 5 peut aussi être contrôlé.

Les paramètres de régulation majeurs dans le dispositif objet de cette invention sont la variation du débit d'injection de la solution renfermant le chlore libre en fonction du débit d'alimentation en eau froide et la variation de l'intensité de courant en fonction de la variation du débit d'injection.

La solution dite électrolytique introduite dans l'électrolyseur, soumise au passage d'un courant continu par des électrodes appropriées, devient le siège des réactions suivantes :

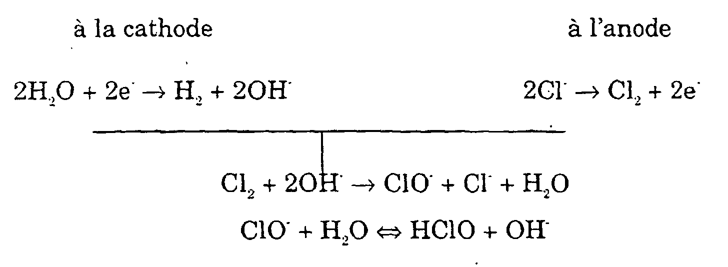

Le chlore libre est essentiellement les espèces HClO et ClO⁻. L'effet bactéricide est maximal lorsque le chlore est sous forme HClO, qui est alors appelé chlore libre actif. A des pH alcalins, l'équilibre est favorable à l'espèce ClO⁻ alors qu'à des pH neutres ou acides l'équilibre est favorable à l'espèce HClO.

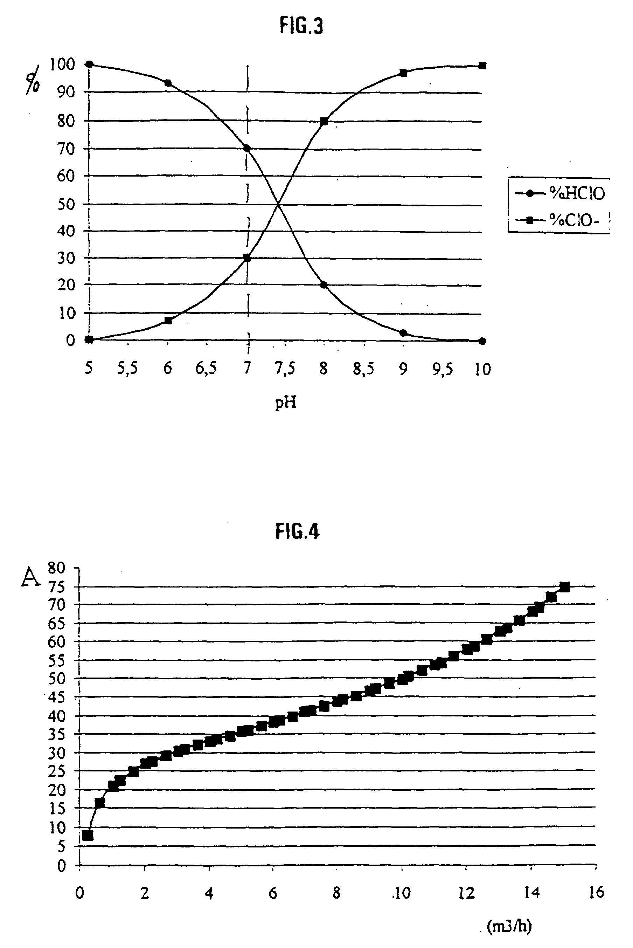

. La présente invention permet d'obtenir après électrolyse, par l'ajustage initial du pH à environ 5 dans le bac 3 de solution électrolytique par ajout d'acide chlorhydrique, un liquide dans l'électrolyseur contenant du chlore libre avec un pH voisin de 7. Ainsi le chlore libre se trouve à plus de 60 % sous forme de chlore libre actif contrairement aux procédés classiques aboutissant à des solutions alcalines dont le pH est au mieux égal à 8 et pour lequel le chlore libre n'est qu'à 20 % sous forme de chlore libre actif. La figure 3 donne les courbes de distribution (en pourcentage massique en ordonnée) des espèces HClO et ClO en fonction du pH, en abscisse. Au pH 7, il y a environ 70% de HClO.

Conformément à l'invention et grâce à une régulation adaptée de l'intensité de courant et du débit de l'injection en fonction du débit d'alimentation des équipements de stockage et production d'eau chaude, l'augmentation des chlorures dans l'eau n'excède en aucun cas 10 mg/l en utilisant une solution électrolytique avec une concentration initiale en chlorure demeurant inférieure à 20 g/l. Ces conditions de fonctionnement protègent des risques de corrosion connus lors de l'injection de chlore libre.

La figure 4 montre un exemple de régulation d'intensité de courant (en Ampères en ordonnée) en fonction du débit d'alimentation en eau froide (en m3/heure en abscisse).

Le liquide sortant du réacteur électrolytique contient de 2 à 4 g/l de chlore libre selon l'intensité de courant et du débit d'injection.

Dans une version préférée de cette invention, le liquide sortant du réacteur électrolytique contient une concentration en chlore libre allant de 2,5 à 3 g/l.

Selon la présente invention le débit d'injection du liquide de désinfection et de lutte contre la légionellose est régulé en fonction du débit d'eau froide alimentant les équipements de stockage et de production d'eau chaude, de telle sorte à avoir une concentration de l'eau froide désinfectée en chlore libre allant de 2 à 3,5 mg/l et après son chauffage et sa distribution une concentration en chlore libre allant de 1 à 3 mg/l sans pour autant dépasser 3 mg/l pour éviter la formation de trihalométhanes.

Avantageusement, le débit d'injection du liquide de désinfection est régulé de telle sorte que l'eau froide renferme de 2 à 2,5 mg/l de chlore libre, et de 1 à 2 mg/l de chlore libre après son chauffage et sa distribution quel que soit le temps de séjours de stockage, les gammes de concentrations sont réalisées conformément à la circulaire de la DGS N°97/311 du 24 avril 1997 relative à la surveillance et à la prévention de la légionellose.

## Revendications

1. Procédé de traitement en continu d'une eau, **caractérisé en ce qu'**il met en oeuvre un dispositif qui comporte un bac (3) de préparation d'un électrolyte, une pompe d'injection (5) en continu dudit électrolyte dans un réacteur contenant une anode (7) et une cathode (8), une conduite d'injection (12) de la solution électrolysée dans une canalisation (1) d'eau, des moyens de mesure (2) du débit d'eau en circulation dans ladite canalisation, des moyens de réglage (14) de l'intensité du courant entre l'anode et la cathode et du débit d'injection de l'électrolyte, et **en ce que**:
- on stabilise le pH de la solution électrolytique entre 4 et 5,
- on règle l'intensité du courant dans le réacteur pour que le taux de chlore libre dans l'eau à traiter soit compris entre 2 et 3,5 mg/l,
- on injecte en continu la solution électrolysée dans ladite canalisation, en réglant le débit de ladite pompe d'injection (5) en fonction du débit d'eau, dans la canalisation

2. Procédé selon la revendication 1, dans lequel on mesure le pH de la solution électrolytique avec une sonde placée dans ledit bac de préparation.

3. Procédé selon la revendication 2, dans lequel ledit bac de préparation comporte des moyens de réglage du pH de l'électrolyte.

4. Procédé selon l'une des revendications précédentes, dans lequel ladite solution électrolytique est composée d'eau, de chlorure de sodium et d'acide chlorhydrique.

5. Procédé selon la revendication 4, dans lequel la concentration en chlorure de sodium de la dite solution électrolytique n'excède pas 30 g/l.

6. Procédé selon l'une des revendications précédentes, dans lequel ladite cathode est constituée de tiges (11) en acier montées verticalement et soudées sur une plaque circulaire de telle sorte que l'ensemble réalise une géométrie cylindrique.

7. Procédé selon l'une des revendications précédentes, dans lequel ladite anode est constituée par un cylindre métallique placé au centre de la cathode.

8. Procédé selon la revendication 7, dans lequel ledit cylindre est revêtu d'oxyde d'Iridium et/ou de Ruthénium.

9. Procédé selon l'une des revendications précédentes, dans lequel l'ensemble cathode et anode a une hauteur d'environ 300 mm et un diamètre extérieur d'environ 300 mm.

## Patentansprüche

1. Verfahren zur kontinuierlichen Behandlung eines Wassers, **dadurch gekennzeichnet, dass** man eine Vorrichtung einsetzt, die ein Zubereitungsbecken (3) zur Herstellung eines Elektrolyten, eine Pumpe (5) zum kontinuierlichen Einspritzen des Elektrolyts in einen Reaktor, der eine Anode (7) und eine Kathode (8) enthält, eine Einspritzleitung (12) der elektrolysierten Lösung in eine Kanalisation (1) von Wasser, Messmittel (2) des Wasserdurchsatzes im Umlauf in der Kanalisation, Regelungsmittel (15) für die Intensität des Stroms zwischen der Anode und der Kathode und des Durchsatzes der Einspritzung des Elektrolyten umfasst und dadurch, dass:
- man den pH der elektrolytischen Lösung zwischen 4 und 5 stabilisiert,
- man die Intensität des Stroms in dem Reaktor regelt, damit der Gehalt freien Chlors in dem zu behandelnden Wasser zwischen 2 und 3,5 mg/l liegt,
- man kontinuierlich die elektrolysierte Lösung in die Kanalisation einspritzt, indem der Durchsatz der Einspritzpumpe (5) in Abhängigkeit des Wasserdurchsatzes in der Kanalisation geregelt wird.

2. Verfahren nach Anspruch 1, bei dem man den pH der Elektrolytlösung mit einer Sonde misst, die in dem Zubereitungsbecken angeordnet ist.

3. Verfahren nach Anspruch 2, bei dem das Zubereitungsbecken Mittel zur Regelung des pH des Elektrolyten umfasst.

4. Verfahren gemäß einem der vorhergehenden Ansprüche, bei dem die Elektrolytlösung aus Wasser, Natriumchlorid und Salzsäure besteht.

5. Verfahren nach Anspruch 4, bei dem die Natriumchloridkonzentration in der Elektrolytlösung nicht 30 g/l überschreitet.

6. Verfahren nach einem der vorhergehenden Ansprüche, bei dem die Kathode aus Stangen (11) aus Stahl besteht, die vertikal angebracht sind und auf einer kreisförmigen Platte derart verschweißt sind, dass die Anordnung eine zylindrische Geometrie verwirklicht.

7. Verfahren nach einem der vorhergehenden Ansprüche, bei dem die Anode aus einem Metallzylinder, angeordnet im Zentrum der Kathode besteht.

8. Verfahren nach Anspruch 7, bei dem der Zylinder mit Iridium- und/oder Rutheniumoxid ausgekleidet ist.

9. Verfahren nach einem der vorhergehenden Ansprüche, bei dem die Anordnung Kathode und Anode eine Höhe von etwa 300 mm und einen Außendurchmesser von etwa 300 mm hat.

## Claims

1. Process for continuous treatment of water, ***characterised by** the fact that* it employs a device which includes a tank (3) for preparation of an electrolyte, a pump (5) for continuous injection of the said electrolyte into a reactor containing an anode (7) and a cathode (8), a pipe (12) for injection of the electrolysed solution into water piping (1), means (2) for measuring the flow-rate of water circulating in the said piping, means (14) for adjusting the intensity of the current between the anode and the cathode and the electrolyte injection flow-rate, and *by the fact that:*
- the pH of the electrolytic solution is stabilised between 4 and 5,
- the intensity of the current in the reactor is adjusted so that the amount of free chlorine in the water to be treated is between 2 and 3.5 mg/l,
- the electrolysed solution is continuously injected into the said piping, the delivery rate of the said injection pump (5) being adjusted as a function of the flow-rate of the water in the said piping.

2. Process as described in claim 1, in which the pH of the electrolytic solution is measured with a probe placed in the said preparation tank.

3. Process as described in claim 2, in which the said preparation tank includes means for adjusting the pH of the electrolyte.

4. Process as described in one of the preceding claims, in which the said electrolytic solution is composed of water, sodium chloride and hydrochloric acid.

5. Process as described in claim 4, in which the concentration of sodium chloride in the said electrolytic solution does not exceed 30 g/l.

6. Process as described in one of the preceding claims, in which the said cathode consists of vertically mounted steel rods (11) welded onto a circular plate so that the assembly forms a cylindrical geometry.

7. Process as described in one of the preceding claims, in which the said anode consists of a metal cylinder placed at the centre of the cathode.

8. Process as described in claim 7, in which the said cylinder is coated with oxide of iridium and/or of ruthenium.

9. Process as described in one of the preceding claims, in which the cathode and anode assembly has a height of approximately 300 mm and an external diameter of approximately 300 mm.
